Europäisches Patentamt

European Patent Office

Office européen des brevets

(11) Publication number: **0 233 057**
A2

## (12) EUROPEAN PATENT APPLICATION

(21) Application number: **87301006.0**

(22) Date of filing: **05.02.87**

(51) Int. Cl.⁴: **G 01 H 11/08**

(30) Priority: **06.02.86 JP 24685/86**
**19.02.86 JP 22686/86**

(43) Date of publication of application: **19.08.87**
**Bulletin 87/34**

(84) Designated Contracting States: **DE FR GB**

(71) Applicant: **KUREHA KAGAKU KOGYO KABUSHIKI KAISHA, 9-11 Horidome-cho 1-chome Nihonbashi Chuo-ku, Tokyo (JP)**

(72) Inventor: **Hamada, Akira, 78-65, Hananoi Nishiki-machi, Iwaki-shi Fukushima-ken (JP)**
Inventor: **Takahashi, Hisao 64-1, Aza-Kamikawahara, Nakayoshima Yoshima-machi, Iwaki-shi Fukushima-ken (JP)**
Inventor: **Kon, Hiroshi, 3-11-31, Maesawa, Higashikurume Tokyo-to (JP)**

(74) Representative: **Lewin, John Harvey et al, Elkington and Fife High Holborn House 52/54 High Holborn, London WC1V 6SH (GB)**

(54) **Vibration sensor.**

(57) A vibration sensor is formed from a laminated piezoelectric element having a length which comprises a polymer or ceramic piezoelectric sheet and a metal sheet having a bending elasticity and bonded to at least one surface of the piezoelectric sheet so that an electrical output can be taken out from both surfaces of the piezoelectric sheet. At least one part along the length of the laminated piezoelectric element is fixed to leave a vibratable end. A vibration sensor thus formed effectively utilizes a piezoelectric constant of elongation $d_{31}$ and is improved not only in handling characteristic but also in output and frequency characteristics.

VIBRATION SENSOR

FIELD OF THE INVENTION AND RELATED ART

The present invention relates to a new form of vibration sensor with improved sensitivity and frequency characteristics.

Vibration sensors are required in many cases for purposes such as control of operation states or detection of abnormalities with respect to various structures including electrical appliances such as a motor, and buildings. As an example of such vibration sensors, a ceramic-type vibration sensor of a circular shape having a structure wherein a piezoelectric ceramic sheet with a thickness of generally several tens to hundreds of microns is bonded to a metal sheet with a thickss on the order of 0.1 - 1 mm, has been widely used. Such a ceramic-type vibration sensor is used in such a form that it is directly bonded to a vibrating object (an object the vibration of which is to be detected or measured) and that the piezoelectric constant of compression $d_{33}$ thereof is mainly utilized for detection of vibration. Because of constraint on its shape, however, the ceramic-type vibration sensor is not appropriate for a use where it is directly applied to a curved surface. This problem may be alleviated if the sensor is fixed through a fixing member or mount having a face appropriately fitting the

0233057

-2-

curved surface. In such a case, however, a decrease in detection sensitivity results.

On the other hand, it has been also known to use as a vibration sensor a polymer piezoelectric element comprising a piezoelectric polymer film and electrode-forming metal films formed, e.g., by vapor deposition, on both faces of the film, and to apply the pizoelectric element as it is on a vibratig object. While the polymer vibration sensor is excellent in low-frequency characteristic and fitness to a curved surface when compared with one using a ceramic piezoelectric element, it must be formed in a very small thickness on the order of 5 - 10 microns in order to well retain its characteristics, so that it involves difficulties in handling thereof, particularly in maintenance of tension and prevention of breakage on application thereof on a vibrating object. Further, it does not necessarily provide a sufficient output compared with a ceramic vibration sensor.

SUMMARY OF THE INVENTION

In view of the above circumstances, a principal object of the present invention is to provide a vibration sensor with a simple structure and yet with an excellent sensitivity.

Another object of the present invention is to provide a vibration sensor with improved frequency

-3-

characteristic.

A further specific object of the present invention is to provide a polymer vibration sensor with improved handling characteristic and durability.

According to the present invention, there is provided a vibration sensor, comprising a laminated piezoelectric element having a length which comprises a piezoelectric sheet and a metal sheet having a bending elasticity and bonded to at least one surface of the piezoelectric sheet so that an electrical output can be taken out from both surfaces of the piezoelectric sheet, at least one part along the length of the laminated piezoelectric element being fixed to leave a vibratable end, preferably a substantially freely vibratable end.

The vibration sensor according to the present invention has been developed in the course of pursuing the object of, among others, improving the handling characteristic and durability of a polymer vibration sensor. Conventionally, a polymer piezoelectric element has been generally formed by disposing an electrode-forming metal film by vapor deposition on both faces of a piezoelectric polymer film, and almost no one having a metal sheet uniformly bonded to a piezoelectric film has been used. This is presumably because it has been considered that the softness and deformability which are characteristics of a polymer piezoelectric element is lost by provision of such a metal sheet. Herein, an "electrode film" or "metal film" used refers to a metal film which has been used as an electrode film in a conventional polymer piezoelectric element and is substantially thinner than a piezoelectric polymer film, while a "metal sheet" refers to one which has a thickness on the same order of or larger than that of a piezoelectric polymer film and, when laminated with a piezoelectric polymer film, occupies the substantial parts of the bending and tensil moduli of elasticity of the laminate.

Unexpectedly, however, it has been found that a structure obtained by reinforcing a piezoelectric polymer film with a metal sheet and fixing it to leave a vibratable end, provides not only improvements in handling and durability characteristic but also remarkable improvements in performances of a vibration sensor inclusive of output characteristic and vibration characteristic. More specifically, when an external force is exerted on a laminated piezoelectric element obtained by applying a metal sheet on a piezoelectric polymer film rather than on the piezoelectric polymer film alone, the deformation of the piezoelectric polymer film is suppressed in a greater part of frequency range to be considered but a larger output may be obtained in a resonance frequency range of the laminated piezoelectric element. Furthermore, the large output is obtained in the resonance frequency range of the laminated element which is considerably wider than that of the metal sheet alone. This may be attributable to the fact that a polymer film has little dependency on frequency for a wide frequency range. In the vibration sensor with a vibratable end or a vibratable strip thus obtained, the resonance frequency range may be easily controlled by controlling the length, thickness and Young's modulus of the metal sheet. This is considered to be a factor resulting in an improvement in frequency characteristic of the vibration sensor. More specifically, the resonance frequency $W_0$ of free vibration of a sheet material is given by the following equation:

$$W_0 = (1.015t/\ell^2)\sqrt{Y/\rho},$$

wherein $\ell$, $t$, $Y$ and $\rho$ denote the length, thickness, Young's modulus and density, respectively, of the sheet material or a laminated element, if appropriate. In this case, the metal sheet governs the $t$, $Y$ and $\rho$ in the above formula and facilitates the control of $\ell$ through reinforcement of the laminated element. Accordingly, the control of resonance frequency becomes very easy with respect to individual laminated elements, and further by combining a plurality of laminated elements, the control of frequency characteristic of a vibration sensor as a whole also becomes easy.

Further, many of the above mentioned advantages of the above vibration sensor structure may be equally attained in a case where a piezoelectric ceramic sheet is used instead of a piezoelectric polymer film. The vibration sensor obtained in this way utilizes a piezoelectric constant of elongation $d_{31}$ mainly for detecting vibration and makes a remarkable contrast with a conventional ceramic-type vibration sensor which mainly utilizes a piezoelectric constant of compression $d_{33}$.

These and other objects, features and advantages of the present invention will become more apparent upon a consideration of the following description of the preferred embodiments of the present invention taken in conjunction with the accompanying drawings.

BRIEF DESCRIPTION OF THE DRAWINGS

Figures 1A - 1E and 4A - 4D are schematic sectional views across thickness showing various laminated structures of polymer-type laminated piezoelectric elements and ceramic-type laminated piezoelectric elements, respectively, used in the vibration sensor according to the present invention;

Figures 2 and 3 are sectional views respectively showing an embodiment where a vibration sensor of the present invention is used in direct contact with a vibrating object;

Figures 5A and 5B are a sectional view across thickness and a plan view, respectively, showing an embodiment of combination of a vibration sensor of the invention and fixing means;

Figures 6, 7, 9 and 13 are sectional views each showing another embodiment of combination of a vibration sensor and fixing means;

Figures 8, 10 and 12 are plan views each showing another embodiment of combination;

Figure 11 is a view showing another embodiment of the planar shape of the laminated piezoelectric element; and

Figure 14 is a chart showing output characteristic curves of various vibration sensors.

DETAILED DESCRIPTION OF PREFERRED EMBODIMENTS

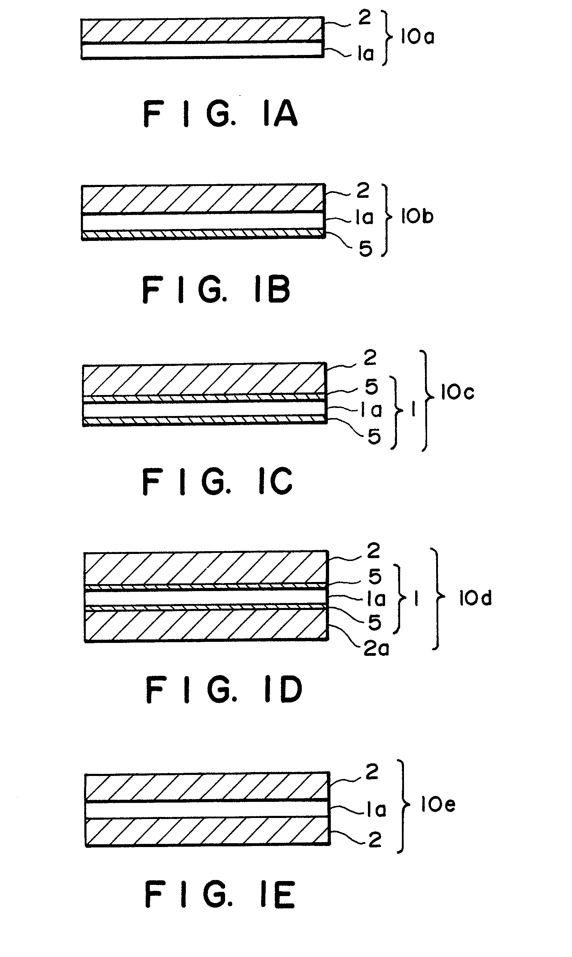

Figures 1A - 1E are sectional views each showing a laminated structure across the thickness of a laminated piezoelectric element comprising a piezoelectric polymer film according to the present invention.

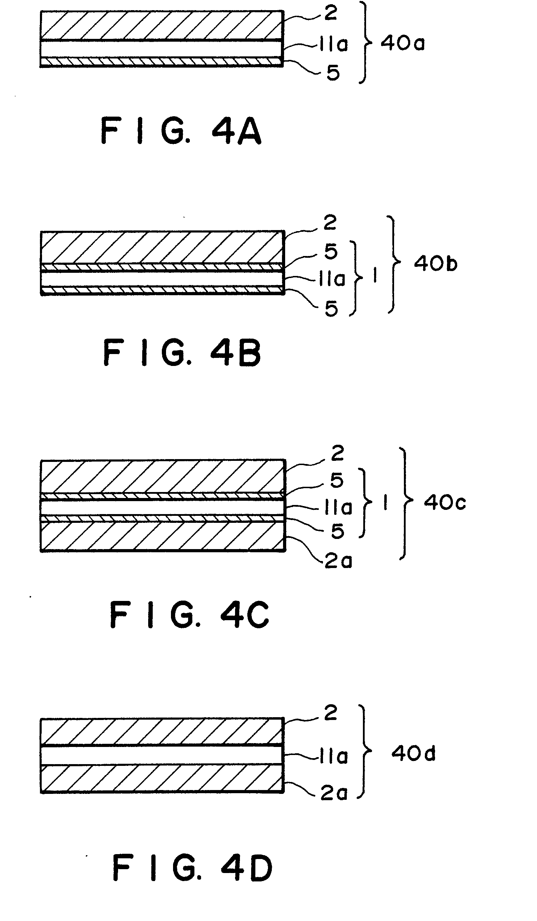

Figure 1A shows a simplest laminar structure of a vibration sensor according to the present invention which is a laminated piezoelectric element per se composed of a piezoelectric polymer film and a metal sheet. More specifically, the laminated piezoelectric element 10a comprises a piezoelectric polymer film 1a of polyvinylidene fluoride, etc., and a metal sheet 2 having a bending elasticity such as a phosphor bronze sheet bonded to one face of the film 1a with a non-conductive adhesive (not shown) represented by epoxy resin or a conductive adhesive (not shown) obtained by incorporating powder of a conductive substance such as carbon, copper, aluminum, silver, and chromium in a nonconductive adhesive. The laminated piezoelectric element 10a may be used, e.g., as shown in Figure 2 wherein a vibrating object 3a is composed of a metal, by applying and fixing one end portion thereof to the object 3a directly with an adhesive (not shown) on the side of the film 1a and by connecting lead wires 4a and 4b to the metal sheet 2 and vibrating object 3a, respectively, sandwiching the film 1a so as to detect a piezoelectricity generated by a vibration strain exerted on the piezoelectric polymer film 1a. The piezoelectric polymer film 1a has a thickness of about 2 to 100 microns when it is composed of a single layer but may be in the form of a laminate with an intermediate adhesive, as desired, having a thickness of 4 - 200 microns. The metal sheet 2 may have a thickness of, e.g., about 10 - 1000 microns, preferably about 10 - 200 microns, and be preferably one showing a Young's modulus of 5 - 50 kg/mm$^2$ and a complete elasticity against a bending with a radius of curvature down to about 0.5 - 2 cm. Examples of preferred materials other than phosphor bronze for constituting the metal sheet include copper, nickel and stainless steel.

The embodiment shown in Figure 1A is simple in structure but involves difficulties with respect to restriction on a material of a vibrating object and handling characteristics. For this reason, it is preferred to use a laminated piezoelectric element 10b which comprises an electrode film 5 of Al, Ni, Cu, Cr, etc., with a thickness of about 0.05 - 5 microns formed, e.g., by vapor deposition or by application of a conductive paint on one face of a piezoelectric polymer film 1a and a metal sheet 2 attached to the other face as shown in Figure 1B, or further preferred to use a laminated piezoelectric element 10c which comprises a piezoelectric element 1 prepared by disposing electrode films 5, e.g., by vapor deposition on both faces of a piezoelectric polymer film and a metal sheet 2 bonded with an adhesive to one face of the piezoelectric element 1 as shown in Figure 1C. It is further possible to use a laminated piezoelectric element 10d obtained by bonding metal sheets 2 and 2a onto both faces of a piezoelectric element 1 as shown in Figure 1D or a laminated piezoelectric element 10e obtained by bonding metal sheets 2 and 2a directly onto both faces of a piezoelectric polymer film 1a. In the

above, the metal sheet 2 is substantially the same as described above, and the metal sheet 2a may be composed of a similar material as the metal sheet 2 and may have a different thickness in the range of about 1 to 10 times that of the metal sheet 2.

These laminated piezoelectric elements 10 (10b - 10e) already have a conductor on their both faces, so that they may be used, e.g., by applying and fixing one end thereof onto a vibrating object 3 of an arbitrary material with an arbitrary adhesive and bonding lead wires 4a and 4b onto both faces so as to take out a piezoelectricity. In case of a laminated piezoelectric element 10b or 10c having a metal sheet 2 on one side thereof, it may be applied to the vibrating object 3 either with the side having the metal sheet 2 or with the reverse side thereof.

Among the laminated piezoelectric elements 10b - 10e, the laminated elements 10b and 10c are preferred in respect of sensitivity or output characteristic.

Figures 4A - 4D are sectional views across thickness of ceramic-type laminated piezoelectric elements 40a - 40d. These laminated piezoelectric elements 40a - 40d have substantially the same structure as the laminated piezoelectric elements 10b - 10e, respectively, as described with reference to Figures 1B - 1E except that a piezoelectric ceramic

sheet 11a is used instead of a piezoelectric polymer film 1a. The piezoelectric ceramic sheet 11a may be composed of a sheet of PLZT (lead-zirconate-titanate) with a thickness of, e.g., 50 - 500 microns. Further, the metal sheet 2 may have a thickness on the order of 10 -1000 microns, and be preferably one showing a Young's modulus of 5 - 30 kg/mm$^2$ and a complete elasticity against a bending with a radius of curvature down to about 5.0 - 0.5 cm. As a piezoelectric ceramic sheet 11a generally has a better heat resistance than a piezoelectric polymer film 1a, a metal adhesive such as solder may well be used for bonding a metal sheet 2.

The above mentioned polymer-type laminated piezoelectric elements 10b - 10e and ceramic-type laminated piezoelectric elements 40a - 40d may be used in substantially the same manner irrespective of their laminated forms, so that in the following explanation, they are collectively represented as a laminated piezoelectric element 10 and the laminated structure thereof is omitted from showing.

In the above described mode of embodiments of the vibration sensor, the laminated piezoelectric element is directly bonded to a vibrating object while leaving a vibration end thereof. However, the vibration sensor of the present invention is characterized by effective utilization of a piezoelectric constant of elongation $d_{31}$, and for this

purpose, a mode is preferred wherein a laminated piezoelectric element having a length in the form of, e.g., a rectangular strip is fixed at a part along the length to leave a vibratable end by using fixing means and attached to a vibrating object through the fixing means. High sensitivity detection is effected thereby through effective utilization of $d_{31}$ by vibration of the vibratable end thus formed. In this mode, the improvement in handling and rigidity by application of a metal sheet according to the present invention is most effectively utilized.

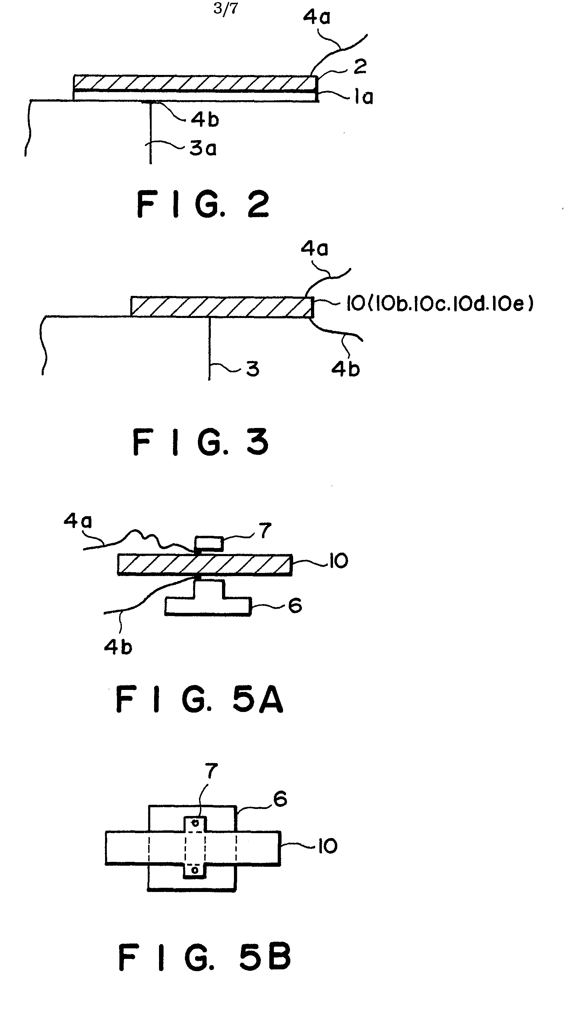

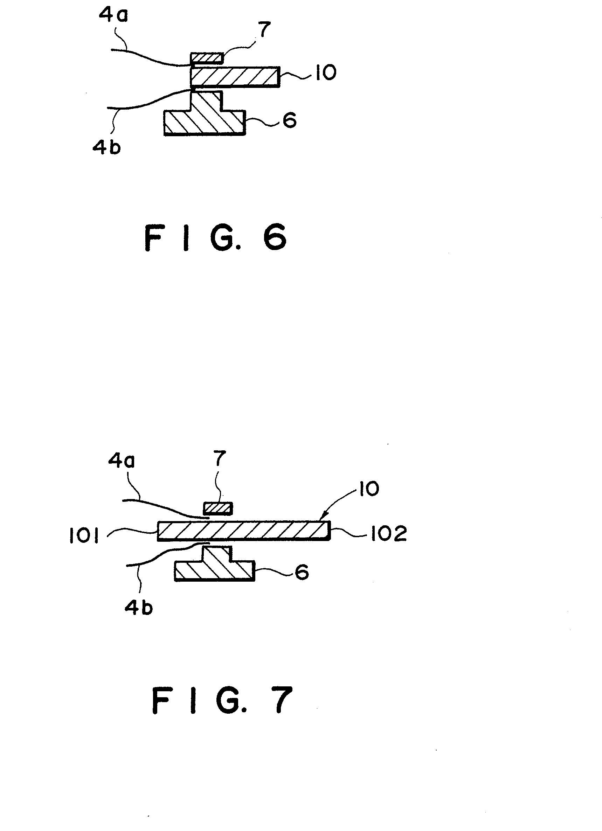

Figures 5A and 5B are a front sectional view and a plan view of a preferred embodiment of the vibration sensor according to this mode of the present invention. Referring to these figures, the vibration sensor is formed by fixing a nearly central part (of, e.g., about 5 mm in length) of a laminated piezoelectric element 10 in the form of a rectangular strip (e.g., 3 mm x 12-20 mm) with fixing means including a mount 6 and a holding member 7 of, e.g., ABS (acrylonitrile-butadiene-styrene) resin, by the medium of lead wires 4a and 4b, the bottom of the mount 6 being attached to a vibrating object (not shown). The laminated element 10 can be fixed at one end thereof as shown in Figure 6 corresponding to Figure 5A or at a non-central part thereof as shown in Figure 7. The vibration sensors shown in Figures 5 - 7 are different in performance as follows. The embodiment shown in Figure 6 is most fundamental and shows a single resonance frequency, while the embodiment of Figure 5 shows a single resonance frequency but provides an output of about two times. On the other hand, the embodiment of Figure 7 shows a sensitivity to vibration in a wider frequency range because it has asymmetrical lengths of vibratable ends to show two resonance frequencies. In a specific example, a laminated element shown in Figure 5 provided an output of 700 mV when subject to vibration with a vertical amplitude of 0.8 micron and a frequency of 600 Hz and about 400 mV for 0.2 micron and 1200 Hz, whereas the unlaminated piezoelectric element 1 of the same planar size used instead of the laminated piezoelectric 10 showed outupts of only 40 mV and 20 mV under the respective sets of conditions. This means that a remarkable increase in output is obtained by the present invention.

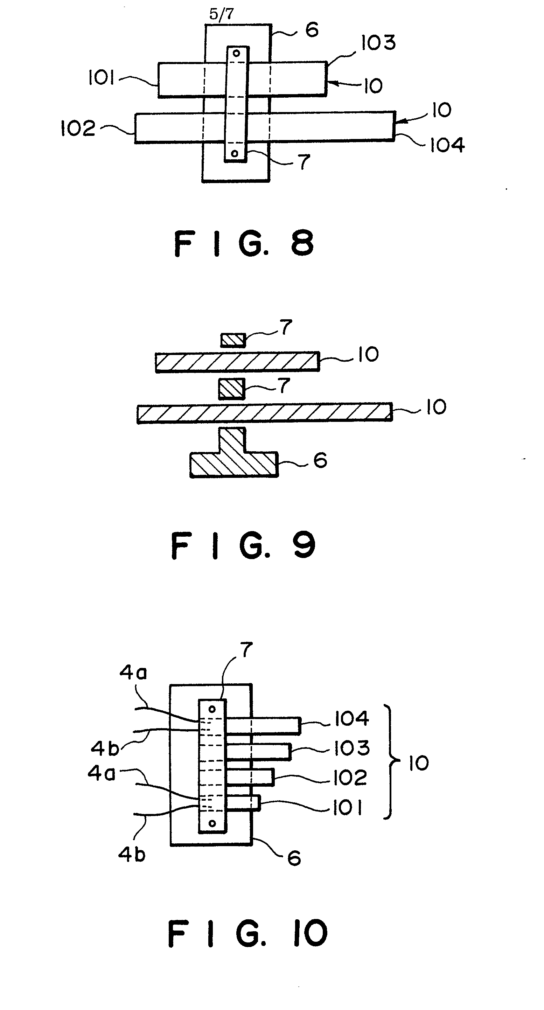

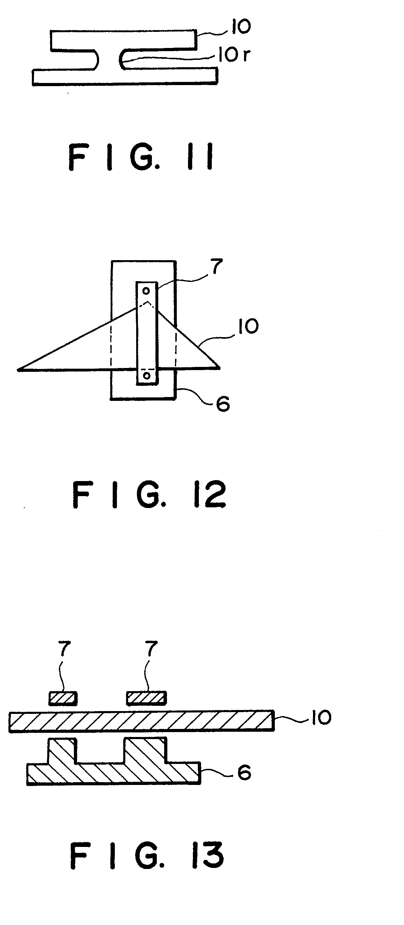

A vibration sensor having a vibratable end as described above shows a good sensitivity to only a considerably narrow range of frequency as is understood from the above mentioned equation for resonance frequency. As a result, in order to provide a sensitivity to a broader range of frequency, it is preferred to increase the number of vibratable ends having different lengths. Figure 7 shows an embodiment adapted to this purpose. In addition, a plurality of laminated elements 10 (101, 102, 103, 104, ...) may be arranged and fixed horizontally by means of a mount 6 and a holding member 7 as shown in Figure 8 corresponding to Figure 5B or may be stacked and fixed vertically as shown in Figure 9 corresponding to Figure 5A, whereby different lengths of free vibration ends in a number of $2n$ (n: number of the laminated elements 10) may be provided. Alternatively, it is of course possible to arrange a plurality of laminated elements 10 (101, 102, 103, 104, ...) with different lengths horizontally and fix them at one end each thereof by means of a mount 6 and a holding member 7 as shown in Figure 10. In an embodiment shown in Figure 8, for example, a plurality of laminated elements 10 may be independent from each other as indicated, or they can be provided in a connected form 10 with a connecting portion 10r formed, e.g., by stamping as shown in Figure 11 so that the connected laminated element 10 is fixed at the connecting portion 10r by fixing means. In the latter case, the number of lead wires can be decreased. Further, as shown in Figure 12, a laminated element 10 with a triangular planar shape may be used by fixing it along a line connecting a point on the longest side and the opposite angle of the triangle to provide triangular vibration ends, so that the frequency selectivity is moderated to provide a sensitivity to a wider range of frequencies. It is further possible to fix a laminated element 10 at two or more points along the length thereof to provide a combination of two vibratable ends and one or more restrictive (or nodular) vibration parts, whereby the sensitive frequency range is further broadened. Further, when a plurality of laminated elements are used, it is also possible to provide and control a multiplicity of resonance frequencies by using metal sheets with respectively different thicknesses.

In the above, the piezoelectric element structure according to the present invention has been referred to as a vibration sensor as a typical and preferred mode of use. However, the structural embodiments as shown in Figures 4 - 13 are respectively usable also as a contact sensor, a microphone or a pickup, and may also be understood broadly as a mechanical → electrical conversion-type piezoelectric device which is intended to be covered by the "vibration sensor" used herein.

The present invention will be explained with reference to experimental examples.

Experiment 1

A piezoelectric film element (produced by Kureha Kagaku Kogyo K.K.) comprising a 30 micron-thick polyvinylidene fluoride film and 600 Å-thick nickel electrode films vapor-deposited on both faces of the polyvinylidene fluoride film was provided, and a 50 micron-thick phosphor bronze sheet was bonded to one face of the piezoelectric element with an epoxy resin (CS-2340, produced by Cemedine K.K.) under roller pressure to obtain an 81 micron-thick laminated piezoelectric element. The laminated element was cut into rectangular strips with an equal width of 3 mm and different lengths. The laminated piezoelectric elements 101, 102, 103 and 104 thus obtained with lengths of 7.6 mm, 8.0 mm, 9.0 mm and 10.0 mm, respectively, were fixed by a mount 6 and a holding member 7 respectively made of bakelite as shown in Figure 8. The mount 6 and the holding member 7 were preliminarily provided with printed wirings so as to contact the electrode films on the laminated piezoelectric elements, and lead wires were connected to the printed wirings. A vibration sensor thus obtained as shown in Figure 8 was attached onto a vibrator, and the output thereof was measured by means of an electric counter and an oscilloscope at various frequencies and various accelerations.

The same test was conducted by using commercially available vibration sensors (Shock Sensor PKS (ceramic-type) mfd. by Murata Seisakusho K.K.; and Super G (polymer-type), mfd. by Mitsubishi Yuka K.K.).

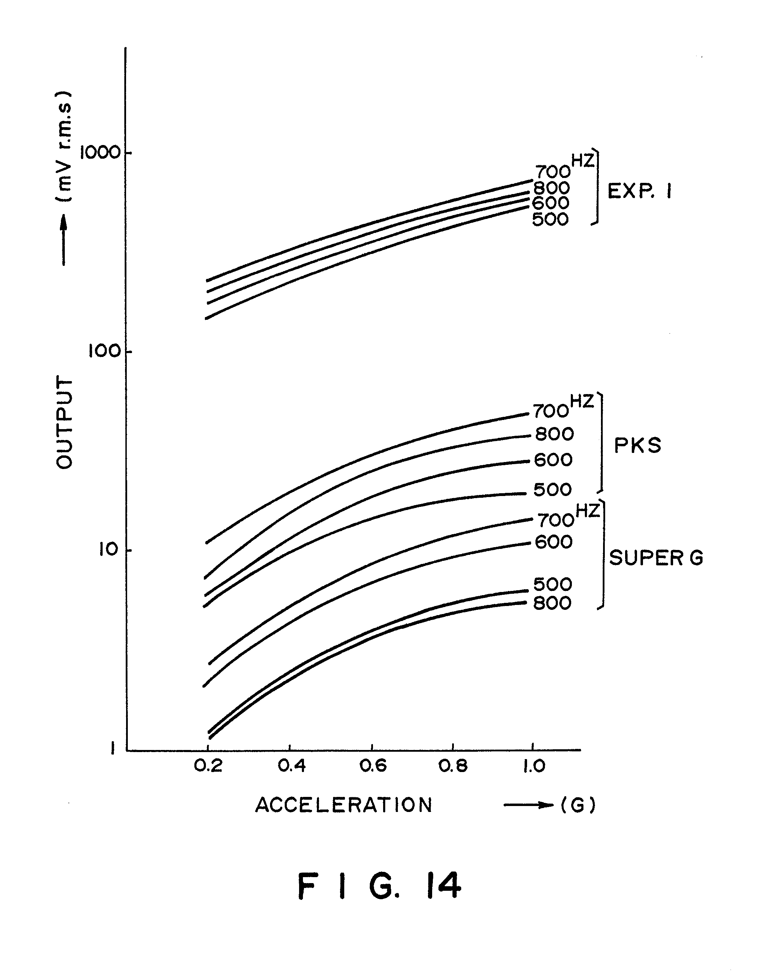

The results are inclusively shown in Figure 14. Figure 14 shows that the vibration sensor of the present invention (EXP. 1) provided extremely larger outputs and showed less decrease in output even when an applied acceleration was smaller, compared with commercially available products.

Experiment 2

A phosphor bronze sheet was bonded onto one face of a 30 micron-thick piezoelectric polymer film (Piezo Film, mfd. by Kureha Kagaku K.K.) with a commercially available conductive adhesive (silver-epoxy) and a 700 Å nickel-gold electrode film was formed on the opposite face by vapor deposition. Three types of laminated piezoelectric elements each with a width of 4 mm were prepared by using phosphor bronze sheets with different thicknesses of 60 - 80 microns. By using these three-types of laminated elements, three vibration sensor samples (Samples 1 - 3) were prepared as shown in Figure 7 (Samples 1 and 2) and Figure 8 (Sample 3) with dimensions shown in the following Table 1.

-18-

TABLE 1

| SAMPLE | METAL SHEET (μm) | WIDTH (mm) | LENGTH (mm) | | | |
|---|---|---|---|---|---|---|
| | | | 1 | 2 | 3 | 4 |
| 1 | 60 | 4 | 10.2 | 5.6 | — | — |
| 2 | 70 | 4 | 6.6 | 4.0 | — | — |
| 3 | 80 | 4 | 10.0 | 6.6 | 5.0 | 4.0 |

The three vibration sensors as described above together with a commercially available vibration sensor (Shock Sensor PKS) were attached to a vibrator, and outputs thereof were measured at various frequencies by means of an electric counter and an oscilloscope. The results are shown in the following Table 2.

TABLE 2

Frequency-Output (mV)

| Frequency (kHz) | 0.2 | 0.4 | 0.6 | 0.8 | 1.0 | 1.2 | 1.4 |
|---|---|---|---|---|---|---|---|
| Commercial Product | 90 | 60 | 50 | 50 | 70 | 70 | 70 |
| Sample 1 | 20 | 720 | 20 | 10 | 20 | 680 | 20 |
| 2 | 10 | 10 | 10 | 20 | 820 | 20 | 10 |
| 3 | 10 | 20 | 900 | 20 | 20 | 760 | 20 |

| 1.6 | 1.8 | 2.0 | 2.2 | 2.4 | 2.6 | 2.8 | 3.0 | 4.0 |
|---|---|---|---|---|---|---|---|---|
| 100 | 150 | 230 | 150 | 80 | 60 | 50 | 40 | 30 |
| 10 | 10 | 10 | 10 | 10 | 10 | 10 | 10 | 10 |
| 20 | 600 | 20 | 10 | 10 | 10 | 10 | 10 | 10 |
| 620 | 20 | 530 | 20 | 10 | 10 | 10 | 10 | 10 |

As shown in Table 2, the commercial product showed a broad output sensitivity in a wide frequency range, while the vibration sensors of the invention were very sensitive to particular frequencies and provided large outputs. Accordingly, the vibration sensor of the present invention can be used without using a band-pass filter when a vibration is detected by using an S/N (signal/noise) ratio, etc. Further, the sensitive frequency can be changed or broadened by adjusting the length and thickness of the laminated piezoelectric elements.

Experiment 3

A metal sheet (60 micron-thick phosphor bronze) was bonded to one face of a piezoelectric ceramic sheet (PLZT 230 microns) with a commercially available conductive adhesive (silver-polyester), and a 600 Å-thick nickel electrode film was formed by vapor-deposition on the other face to provide 4 mm-wide laminated piezoelectric elements with different lengths. Three vibration sensor samples (Samples 4 - 6) were prepared by using the laminated elements as shown in Figures 7 and 8. The arrangement and the dimensions of the laminated elements for each sample were as shown in the following Table 3.

-21-

TABLE 3

|  | ARRANGE-MENT | LENGTH OF LAMINATED ELEMENTS (mm) | | | |
|  |  | 1 | 2 | 3 | 4 |
| Sample 4 | Fig. 7 | 15 | 24 | - | - |
| 5 | Fig. 7 | 20 | 24 | - | - |
| 6 | Fig. 8 | 11 | 15 | 20 | 36 |

The above vibration sensors together with a commercially available vibration sensor (Shock Sensor PKS) were attached to a vibrator, and outputs thereof were measured at various frequencies by means of an electric counter and an oscilloscope. The results are shown in the following Table 4.

TABLE 4

Frequency-Output (mV)

| Frequency (kHz) | 0.2 | 0.4 | 0.6 | 0.8 | 0.9 | 1.0 | 1.2 | 1.4 | 1.6 |
|---|---|---|---|---|---|---|---|---|---|
| Commercial Product | 90 | 60 | 50 | 50 | 60 | 70 | 70 | 70 | 100 |
| Sample 4 | 20 | 30 | 30 | 1000 | 30 | 30 | 800 | 40 | 10 |
| 5 | 20 | 30 | 60 | 1200 | 440 | 30 | 20 | 10 | 10 |
| 6 | 20 | 50 | 1500 | 50 | 800 | 30 | 600 | 20 | 10 |

| 1.8 | 2.0 | 2.2 | 2.4 | 2.6 | 2.8 | 3.0 | 4.0 |
|---|---|---|---|---|---|---|---|
| 150 | 230 | 150 | 80 | 60 | 50 | 40 | 30 |
| 10 | 10 | 10 | 10 | 10 | 10 | 10 | 10 |
| 10 | 10 | 10 | 10 | 10 | 10 | 10 | 10 |
| 400 | 10 | 10 | 10 | 10 | 10 | 10 | 10 |

Table 4 shows that similar results as obtained with respect to Samples 1 - 3 (polymer-type vibration sensors) were obtained with respect to Samples 4 - 6 (ceramic-type vibration sensors).

As described hereinabove, the present invention provides a vibration sensor or mechanical → electrical conversion type piezoelectric device which is not only excellent in handling characteristics but also provided with improved output and frequency characteristics through effective utilization of a piezoelectric constant of elongation $d_{31}$, by applying a metal sheet having a bending elasticity onto at least one surface of a polymer or ceramic piezoelectric sheet and fixing the resultant laminated piezoelectric element having a length to leave a vibration end.

0233057

-24-

WHAT IS CLAIMED IS:

1.  A vibration sensor, comprising a laminated piezoelectric element having a length which comprises a piezoelectric sheet and a metal sheet having a bending elasticity and bonded to at least one surface of the piezoelectric sheet so that an electrical output can be taken out from both surfaces of the piezoelectric sheet, at least one part along the length of the laminated piezoelectric element being fixed to leave a vibratable end.

2.  A vibration sensor according to Claim 1, wherein said metal sheet is bonded so as to cover substantially entirety of said at least one surface of the piezoelectric sheet.

3.  A vibration sensor according to Claim 1 or 2, wherein said piezoelectric sheet comprises a piezoelectric polymer film.

4.  A vibration sensor according to Claim 1 or 2, wherein said piezoelectric sheet comprises a piezoelectric ceramic sheet.

5.  A vibration sensor according to any of Claims 1 to 4, wherein said metal sheet is bonded to at least one surface of the piezoelectric sheet through an

-25-

electrode film preliminarily disposed on said at least one surface.

6. A vibration sensor according to any of Claims 1 to 5, wherein said metal sheet is bonded to one surface of the piezoelectric sheet, and an electrode film is disposed on the other surface of the piezoelectric sheet.

7. A vibration sensor according to any of Claims 1 to 6, wherein said laminatd piezoelectric element is provided in a plurality and fixed parallel to each other with a fixing member.

8. A vibration sensor according to Claim 7, wherein the plurality of laminated piezoelectric elements are fixed so as to align on substantially a single plane.

9. A vibration sensor according to Claim 7, wherein the plurality of laminated piezoelectric elements are fixed so as to align on mutually parallel planes.

10. A vibration sensor according to any of Claims 7 - 9, wherein the plurality of laminted piezoelectric elements have different lengths.

11. A vibration sensor according to any of Claims 7 - 10, wherein the plurality of laminated piezoelectric elements have different thicknesses.

12. A vibration sensor according to any of Claims 1 - 11, wherein said laminated piezoelectric element is fixed at one end along the length thereof, and the other end is left as a vibratable end.

13. A vibration sensor according to any of Claims 1 - 11, wherein said laminated piezoelectric element is fixed at an intermediate part along the length thereof, and both ends are left as vibratable ends.

14. A vibration sensor according to Claim 13, wherein both vibratable end portions have different lengths.

15. A vibration sensor according to any of Claims 1 - 14, wherein said laminated piezoelectric element has a shape of generally a rectangular strip.

16. A vibration sensor according to any of Claims 1 - 14, wherein said laminated piezoelectric element has a shape of generally a triangular strip.

FIG. IA

FIG. IB

FIG. IC

FIG. ID

FIG. IE

F I G. 4A

F I G. 4B

F I G. 4C

F I G. 4D

4a

2

1a

4b

3a

# F I G. 2

4a

10(10b.10c.10d.10e)

3

4b

# F I G. 3

4a

7

10

6

4b

# F I G. 5A

7

6

10

# F I G. 5B

F I G. 6

F I G. 7

5/7

101 103 10

102 10 104

6 7

# F I G. 8

7

10

7

10

6

# F I G. 9

7

4a 104

4b 103 10

4a 102

101

4b 6

# F I G. 10

F I G. 11

F I G. 12

F I G. 13

F I G. 14